(19) Europäisches Patentamt

European Patent Office

Office européen des brevets

(11) Veröffentlichungsnummer: **0 247 972 B1**

(12) **EUROPÄISCHE PATENTSCHRIFT**

(45) Veröffentlichungstag der Patentschrift: **15.01.92**

(21) Anmeldenummer: **87810313.4**

(22) Anmeldetag: **25.05.87**

Teilanmeldung 91100344.0 eingereicht am 25/05/87.

(51) Int. Cl.⁵: **G02F 1/01**

(54) **Optischer Bildverstärker.**

(30) Priorität: **30.05.86 CH 2208/86**

(43) Veröffentlichungstag der Anmeldung:
**02.12.87 Patentblatt 87/49**

(45) Bekanntmachung des Hinweises auf die
Patenterteilung:
**15.01.92 Patentblatt 92/03**

(84) Benannte Vertragsstaaten:
**CH DE FR GB LI NL SE**

(56) Entgegenhaltungen:
**EP-A- 0 029 006**
**CH-A- 378 432**
**CH-A- 454 296**
**DE-A- 2 011 575**
**US-A- 4 023 969**

(73) Patentinhaber: **GRETAG Aktiengesellschaft**
**Althardstrasse 70**
**CH-8105 Regensdorf(CH)**

(72) Erfinder: **Rhomberg, Bruno Glemens**
**Zugerstrasse 18**
**CH-8915 Hausen(CH)**

(74) Vertreter: **Kleewein, Walter, Dr. et al**
**Patentabteilung CIBA-GEIGY AG Postfach**
**CH-4002 Basel(CH)**

# EP 0 247 972 B1

## Beschreibung

Die Erfindung bezieht sich auf eine Vorrichtung zur Verstärkung der Intensität eines optisch erzeugten Bildes gemäss Oberbegriff des Patentanspruchs 1.

Eine der ersten solcher i.a. als optische Bildverstärker bezeichneten Vorrichtungen ist z.B. in der CH-A 301 222 beschrieben. Das Grundprinzip dieser bekannten Vorrichtung besteht darin, dass ein System von zueinander parallel im Abstand angeordneten Barren über eine spiegelnde Fläche auf ein zugeordnetes zweites Barrensystem abgebildet wird, wobei sich die spiegelnde Fläche auf einer durch elektrostatische Feldkräfte deformierbaren Steuerschicht befindet, welche zusammen mit einer lichtelektrischen Leiterschicht in einem elektrostatischen Feld angeordnet ist. Das zu verstärkende Bild wird in gerasterter Form auf die lichtelektrische Leiterschicht abgebildet, wodurch das elektrostatische Feld bildmässig lokal verändert und eine enstsprechende Deformation der Steuerschicht und damit auch der spiegelnden Fläche bewirkt wird. Die deformierte spiegelnde Fläche wird zwischen den Barren des zweiten Barrensystems hindurch auf einem Projektionsschirm abgebildet, auf welchem dann ein dem zu verstarkenden Bild entsprechendes Bild grösserer Helligkeit zu sehen ist.

Zur Erzeugung des elektrostatischen Felds sind bei der aus der CH-A 301 222 bekannten Vorrichtung zwei durchsichtige homogene Elektrodenflächen vorhanden, die mit der lichtelektrischen Leiterschicht bzw. der Steuerschicht verbunden und an eine elektrische Spannungsquelle angeschlossen sind. Bei der bildmässigen Belichtung der lichtelektrischen Leiterschicht ändert sich deren elektrischer Widerstand. Durch die Widerstandsänderung in longitudinaler, d.h. zum elektrischen Feld paralleler Richtung ändert sich lokal die Spannungsaufteilung zwischen der lichtelektrischen Leiterschicht und dem Zwischenraum zwischen dieser und der Steuerschicht, wodurch wiederum eine entsprechende Deformation der Steuerschicht und mit dieser der spiegelnden Fläche hervorgerufen wird.

Dieses Prinzip der Ausnützung der Widerstandsänderung der lichtelektrischen Leiterschicht in longitudinaler Richtung hat eine Reihe von Nachteilen, die z.B. in der CH-A 378 432 ausführlich erläutert sind. Unter anderem ist für eine einigermassen brauchbare Steuerwirkung eine relativ grosse Mindestdicke der lichtelektrischen Leiterschicht erforderlich, welche aber anderseits stets die Gefahr von störenden Raumladungseffekten mit sich bringt.

In der CH-A 378 432 ist ein optischer Bildverstärker beschrieben, bei welchem die Nachteile des vorstehend erläuterten bekannten Bildverstärkers dadurch vermieden werden sollen, dass nicht die longitudinale sondern die transversale lokale elektrische Leitfähigkeit- bzw. Widerstandsänderung der lichtelektrischen Leiterschicht ausgenützt wird. Dazu ist die mit der lichtelektrischen Leiterschicht in Kontakt stehende Elektrode als Streifenraster ausgebildet, wobei die in regelmässigen Abständen nebeneinander angeordneten, elektrisch leitenden Streifen orthogonal zu den Barren des ersten Barrensystems verlaufen und in wechselnder Folge an den einen und an den anderen Pol einer elektrischen Spannungsquelle angeschlossen sind. Des weiteren ist diesem Elektrodenraster belichtungsseitig ein optisches Streifenraster mit unter vorzugsweise 45° zum Elektrodenraster verlaufenden Rasterstreifen vorgesetzt.

Mit dieser Elektrodenausbildung und -anordnung ändert sich bei Belichtung die Potentialverteilung in der lichtelektrischen Leiterschicht, und es ist allein diese Potentialverteilung in der Schicht, welche die auf die Steuerschicht bzw. die spiegelnde Fläche einwirkenden Kräfte bestimmt. Die lichtelektrische Leiterschicht kann daher beliebig dünn sein, solange nur ihr elektrischer Widerstand nicht durch Nebenschluss ihrer Unterlage beeinträchtigt wird. Ausserdem ist dadurch auch die bei der bekannten longitudinalen Widerstands-Modulation vorhandene Schwierigkeit eines hohen spezifischen elektrischen Widerstandes der Schicht eliminiert, da eine geeignete Wahl der Spannung zwischen den Elektrodenstreifen und der Dicke der Schicht jeden praktisch verfügbaren Wert erlaubt.

Trotz dieser gegenüber dem mit Longitudinal-Modulation arbeitenden Bildverstärker offensichtlichen Verbesserungen konnte sich jedoch der in der CH-A 378 432 beschriebene Bildverstärker in der Praxis nicht durchsetzen. Einer der Hauptgründe liegt vor allem darin, dass bei der diesem Bildverstärker eigenen Elektrodenkonfiguration mit wechselweiser Polarität der einzelnen Elektrodenstreifen eine unerwünschte Grunddeformation der Steuerschicht auftritt, die gegenüber der durch die bildmässige Belichtung hervorgerufenen, beabsichtigten Nutzdeformation sehr viel grösser ist. Dieses ungünstige Verhältnis zwischen Grund- und Nutzdeformation ist gleichbedeutend mit geringer Empfindlichkeit und geringem Wirkungsgrad der gesamten Anordnung.

Eine hinsichtlich Wirkungsgrad und Kurzschluss-Empfindlichkeit gegenüber dem System der CH-A 378 432 deutlich verbesserte Vorrichtung ist in EP-B 29 006 (US 4 519 682) beschrieben. Bei dieser Vorrichtung liegen alle Streifen der der lichtelektrischen Leitschicht benachbarten, als Streifenraster ausgebildeten Elektrode bezüglich der Gegenelektrode auf demselben Potential. Das zu verstärkende Bild wird auf die lichtelektrische Leiterschicht in gerasteter Form aufbelichtet, wobei das Raster orthogonal zum

EP 0 247 972 B1

Elektrodenraster verläuft. Letzteres ist orthogonal zu den Barren ausgerichtet. Die optische Rasterung des Bilds erfolgt durch ein Spiegelraster, durch ein Absorptionsraster auf der Oberfläche einer Faserplatte oder dadurch, dass die lichtelektrische Leiterschicht selbst aus einzelnen Streifen besteht. Ferner kann auch das zu verstärkende Bild selbst gerastert leuchten bzw. gerastert beleuchtet sein. Das System weist eine sehr geringe Grunddeformation der Steuerschicht auf und besitzt damit eine relativ hohe Empfindlichkeit und einen hohen Wirkungsgrad.

Dieser aus der genannten EP-B 29 006 (-US-A-4 519 682) bekannten Vorrichtung haften jedoch immer noch gewisse Mängel an. So bewirkt z.B. die relativ hohe Dielektrizitätskonstante der über dem Elektrodenraster befindlichen gläsernen Trägerschicht eine Homogenisierung des elektrischen Felds, was relativ hohe Spannungen für eine gegebene Deformation der Gelschicht und einen relativ grossen Rasterabstand bei gegebenem Luftabstand zwischen den beiden Elektroden erfordert. Weitere Nachteile sind Raumladungseffekte in der lichtelektrischen Leiterschicht, die zum Einbrennen des Bilds (bleibende Deformation der Gelschicht) führen, sowie der Umstand, dass die Gelschicht immer an denselben Stellen deformiert wird, was ebenfalls unerwünscht ist.

Weitere Bildverstärker sind in CH-A-454 296, US-A-3 638 027 (-DE-A-2 011 575) und US-A-4 023 969 beschrieben. Auch den aus diesen Druckschriften bekannten Bildverstärkern haften mehr oder weniger viele der vorstehend erläuterten Mängel der anderen bekannten Bildverstärker an.

Aufgabe der Erfindung ist nun, eine Vorrichtung der aus der EP-B 219 006 (-US-A-4 519 682) bekannten Art hinsichtlich der genannten, dieser noch anhaftenden Mängel zu verbessern.

Die Lösung dieser Aufgabe besteht gemäss der Erfindung in den in der Kennzeichnung des Anspruchs 1 angegebenen Massnahmen. Besonders vorteilhafte und zweckmässige Ausgestaltungen der Erfindung sind in den abhängigen Ansprüchen beschrieben.

Im folgenden wird die Erfindung anhand der Zeichnung näher erläutert. Es zeigen:

Fig. 1 eine schematische Darstellung der Gesamtvorrichtung,

Fig. 2 ein in Fig. 1 mit SE bezeichnetes Steuerelement gemäss der EP-B 29 006 (-US-A-4 519 682),

Fig. 3. eine vereinfachte Darstellung einer ersten Ausführungsform eines Steuerelements gemäss der Erfindung,

Fig. 4 ein Diagramm zur Erläuterung einer in Fig. 3 dargestellten Ausgleichsschicht,

Fig. 5 eine weitere Ausführungsform eines erfindungsgemässen Steuerelements mit den zugehörigen elektrischen Elementen und

Fig. 6 eine Detailvariante.

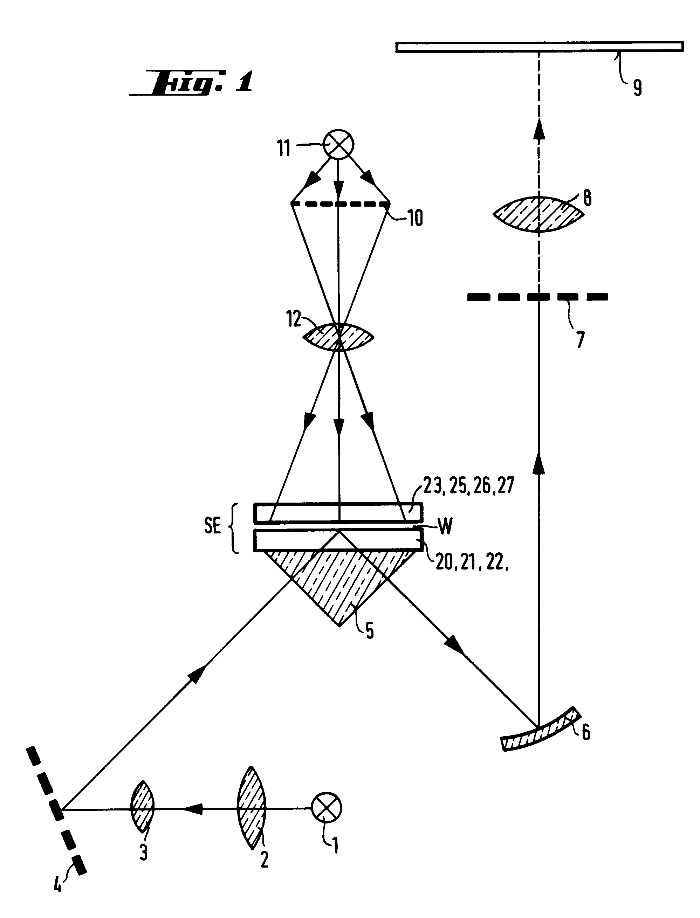

Die Gesamtanordnung der Vorrichtung entspricht im wesentlichen der aus der EP-B 29 006 (-US-A 4 519 682) bekannten Vorrichtung. Das von einer Lichtquelle 1 ausgehende Licht gelangt über zwei Linsen bzw. Linsensysteme 2 und 3 auf ein erstes Barrensystem 4, wird von diesem über ein Prisma 5 auf ein noch zu erläuterndes, die Steuerschicht enthaltendes Steuerelement SE geworfen, gelangt von dort über einen Hohlspiegel 6 zu einem zweiten Barrensystem 7 und wird schliesslich von einer weiteren Linse bzw. einem Linsensystem 8 auf eine Projektionsfläche 9 geleitet. Das zu verstärkende Bild 10 wird von einer Lichtquelle 11 beleuchtet und über eine Linse bzw. ein Linsensystem 12 auf die im Steuerelement SE enthaltene lichtelektrische Leiterschicht abgebildet. Die Längskanten der Barren 4 und 7 verlaufen in Fig. 1 senkrecht zur Zeichenebene.

Wie gesagt, insoweit entspricht die erfindungsgemässe Vorrichtung den bekannten Bildverstärkern. Näheres über deren Aufbau und deren Funktion kann der einschlägigen Literatur oder z.B. den schon angeführten CH-A Nos. 301 222 und 378 432 sowie der EP-B 29 006 (-US-A-4 519 682) entnommen werden.

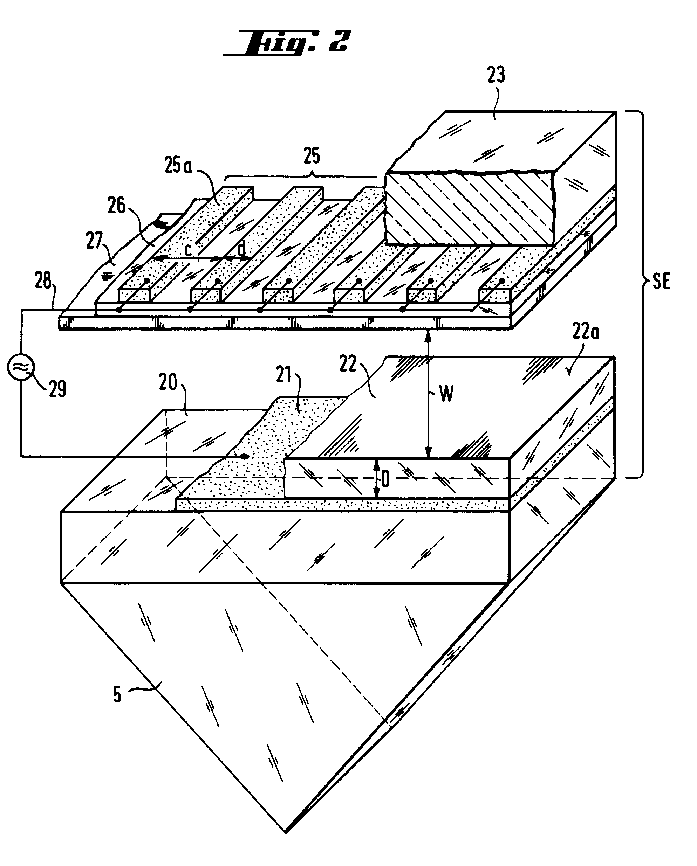

In Fig. 2 ist ein bekanntes Steuerelement SE gemäss der EP-B 29 006 (-US-A-4 519 682) dargestellt. Die für das Verständnis irrelevanten Teile wie Rahmen, Halterungen etc. sind dabei weggelassen.

Das Steuerelement SE umfasst eine durchsichtige untere Trägerplatte 20, auf welcher sich ein durchsichtiger Leitfähigkeitsbelag 21 und die schon genannte Steuerschicht 22 befinden, und eine durchsichtige obere Trägerplatte 23, auf der der Reihe nach ein metallisch leitendes Elektrodenraster 25, eine lichtelektrische Leiterschicht 26 und eine schwarze, lichtundurchlässige und nichtleitende Schutzschicht 27 angeordnet sind. Zwischen der oberen und der unteren Trägerplatte mit ihren respektiven Schichten besteht ein Luftspalt mit einer Weite W von etwa 10-30 $\mu$m.

Das Elektrodenraster 25 besteht aus einer Reihe von durchsichtigen, elektrisch leitenden Streifen 25a, die in regelmässigen Abständen parallel nebeneinander angeordnet und parallel zu den Längskanten der Barren 4 und 7 ausgerichtet sind. Die mit c bezeichnete Rasterperiode des Elektrodenrasters beträgt etwa 50-200 $\mu$m und ist vorzugsweise möglichst gering. Die Breite d der Leiterstreifen 25a ist etwa 1/6 bis 1/4 der Rasterperiode c, vorzugsweise etwa 1/5. Bei einer praktischen Rasterperiode von etwa 150 $\mu$m beträgt die Streifenbreite dann vorzugsweise etwa 30 $\mu$m und der Abstand zwischen je zwei Leiterstreifen demnach

3

etwa 120 $\mu$m.

Die einzelnen Leiterstreifen 25a des Elektrodenrasters 25 sind an ihren Enden durch eine in der Zeichnung nur schematisch dargestellte Sammelschiene 28 verbunden und an den einen Pol einer Wechselspannungsquelle 29 angeschlossen. Der andere Pol der Spannungsquelle 29 ist mit dem als Gegenelektrode dienenden Leitfähigkeitsbelag 21 auf der unteren Trägerplatte 20 verbunden. Die elektromotorische Kraft der Spannungsquelle 29 beträgt etwa 200-300 $V_{eff}$ bei einer Frequenz von etwa 100-500 Hz, je nach lichtelektrischer Leiterschicht.

Die einzelnen Leiterstreifen 25a des Elektrodenrasters 25 liegen somit bezüglich der Gegenelektrode 21 alle auf demselben Potential. Ohne Belichtung der lichtelektrischen Leiterschicht 26 ist diese isolierend bzw. schlecht leitend, so dass sich zwischen den einzelnen Leiterstreifen 25a relativ flache Potentialtäler ausbilden, d.h., zwischen den Leiterstreifen herrscht bezüglich der Gegenelektrode 21 ein betragsmässig kleineres Potential als am Ort Leiterstreifen 25a. Diese Potentialtäler führen zu einer wellenförmigen Deformation der Steuerschicht 22, wobei diese Wellen entsprechend der Orientierung des Elektrodenrasters parallel zu den Längskanten der Barren 4 und 7 gerichtet sind. Das von der Lichtquelle 1 stammende und an der Oberfläche 22a der Steuerschicht 22 totalreflektierte Licht wird dabei quer zu den Barren 7 abgelenkt und gelangt daher an diesen vorbei auf die Projektionsfläche 9. Die letztere erscheint damit homogen aufgehellt.

Wenn nun die lichtelektrische Leiterschicht 26 homogen beleuchtet wird, gleichen sich die Potentiale auf und zwischen den Leiterstreifen 25a des Elektrodenrasters 25 aus und die Steuerschicht 22 erfährt damit keine Deformation. Das von der Steuerschicht totalreflektierte Licht kann nun nicht an den Barren 7 vorbei auf den Projektionsschirm gelangen, und letzterer bleibt dunkel.

Bei bildmässiger Beleuchtung der lichtelektrischen Leiterschicht 26 ergibt sich eine entsprechende aber umgekehrte bildmässige Leuchtdichteverteilung auf der Projektionsfläche, wobei helle Stellen des zu verstärkenden Bildes 10 dunkel und dunkle Stellen hell auf der Projektionsfläche erscheinen.

Die Steuerschicht 22 ist irgendein elasto-viskoses Material, dessen Oberfläche bzw. dessen optische Eigenschaften durch ein elektrisches Feld deformiert bzw. geändert werden können. Vorzugsweise ist die Steuerschicht eine Gel-Schicht mit einer Dicke D von etwa 30-120 $\mu$m, vorzugsweise etwa rund 70 $\mu$m. Als Gel kommt z.B. die unter der Bezeichnung Sil-Gel 604 von der Firma Wacker, München, BRD angebotene Qualität in Frage.

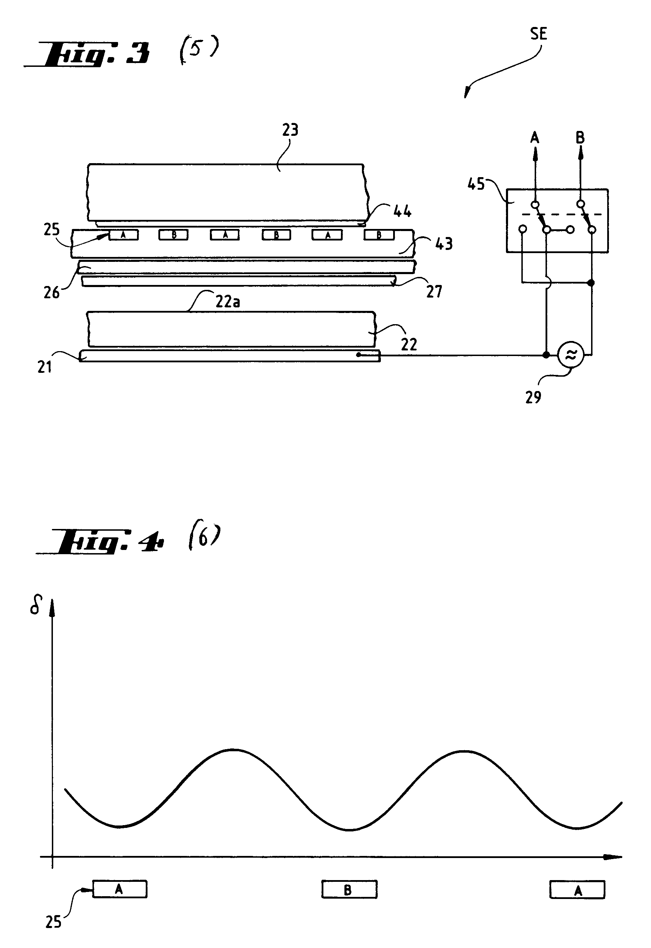

Das vorstehend beschriebene Steuerelement SE gemäss der EP-B 29 006 (=US-A-4 519 682) weist noch die eingangs erläuterten Mängel auf. Diese Mängel werden nun durch die in den Fig. 3 - 6 dargestellten erfindungsgemäss verbesserten Steuerelemente behoben. Der grundsätzliche Aufbau dieser erfindungsgemässen Steuerelemente stimmt mit dem gemäss Fig. 2 überein, sodass die Steuerelemente nur noch schematisch im Schnitt (parallel zur Papierebene in Fig. 2) dargestellt sind. Diese Schnittdarstellungen lassen jedoch die für das Verständnis der Erfindung wichtigen Details ohne weiteres erkennen. Die gegenüber Fig. 2 unveränderten Komponenten der erfindungsgemässen Steuerelemente sind mit denselben Bezugzeichen wie in Fig. 2 bezeichnet und werden im folgenden nicht nochmals gesondert erläutert.

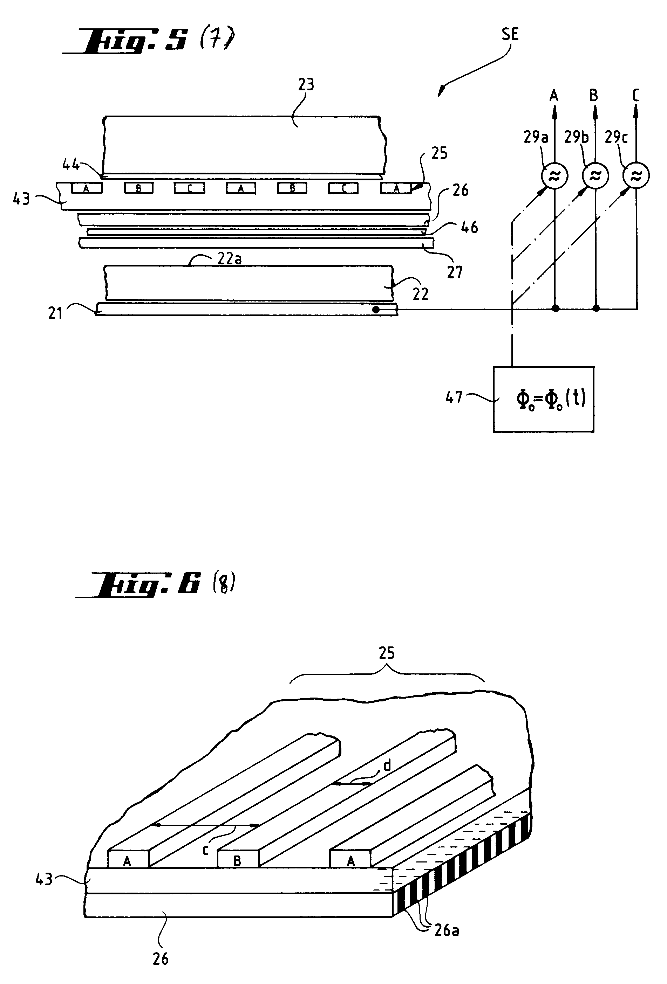

Das wesentlichste Merkmal des in Fig. 3 dargestellten Steuerelements SE besteht darin, dass die lichtelektrische Leiterschicht 26 gegenüber dem Elektrodenraster 25 durch eine Isolationsschicht 43 elektrisch isoliert ist und dass die elektrisch leitenden Streifen 25a des Elektrodenrasters abwechselnd an den einen und an den anderen Pol der Wechselspannungsquelle 29 angeschlossen sind, jeder zweite Streifen also auf demselben Potential wie die Gegenelektrode 21 liegt. Ferner ist zwischen dem Elektrodenraster 25, dessen Streifen hier mit A und B bezeichnet sind, und der oberen Trägerplatte 23 eine Ausgleichsschicht 44 vorgesehen. Diese hat das in Fig. 4 dargestellte optische Dämpfungsverhalten, das heisst, die optische Dämpfung $\delta$ dieser Schicht ist im Bereich der Rasterstreifen A,B des Elektrodenrasters 25 am geringsten und dazwischen am stärksten. Die Dämpfung wird vorzugsweise durch die Reflektivität der Ausgleichsschicht bewirkt. Die Ausgleichsschicht 44 bewirkt durch den angegebenen Dämpfungsverlauf, dass das Steuerlicht überall dieselbe Steuerwirkung hat.

Die abwechselnden Potentiale der aufeinanderfolgenden Streifen A,B des Elektrodenrasters 25 haben zur Folge, dass das Potential auf der Geloberfläche 22a gut durchmoduliert ist. Durch das Fehlen eines elektrischen Kontakts zwischen dem Elektrodenraster 25 und der lichtelektrischen Leiterschicht 26 bauen sich geringere unerwünschte Raumladungen auf und die lichtelektrische Leiterschicht 26 bleibt insgesamt neutral. Raumladungen in der lichtelektrischen Leiterschicht haben tendenziell die Eigenschaft, sich mit der doppelten Raumfrequenz des Steuerfelds aufzubauen. Dadurch ist der Einfluss der Raumladungen in der lichtelektrischen Leiterschicht auf die Oberfläche 22a der Steuerschicht 22 viel geringer.

Die Streifen A,B des Elektrodenrasters 25 sind vorzugsweise transparent, z.B. aus Indium-Zinn-Oxid. Dadurch kann das Steuerlicht auch unter dem Elektrodenraster wirksam werden, wodurch Moirée-Erscheinungen verringert werden.

Die Isolationsschicht 43 besteht vorzugsweise aus einem hochreinen, hochtemperaturfesten Kunststoff, z.B. Polyimid, oder aus einem anorganischen Isolator, z.B. Siliziumdioxid oder Siliziumnitrid.

Die lichtelektrische Leiterschicht 26 besteht vorzugsweise aus amorphem oder kristallinem Silizium. Sie ist mit Vorteil durch eine Vielzahl von nicht oder schlechter leitenden Bahnen 26a unterbrochen, welche quer zur Längsrichtung der Streifen A,B des Elektrodenrasters 25 verlaufen (Fig. 6). Bei einer Rasterperiode c von z.B. 50 $\mu$m sind diese Bahnen 26a je etwa 1 $\mu$m breit und ca. 6 - 7 $\mu$m voneinander entfernt. Der gegenseitige Abstand und die Anzahl und Breite der Bahnen 26a sind so bemessen, dass durch ihr Vorhandensein bei gleichmässiger Beleuchtung der lichtelektrischen Leiterschicht 26 kein nennenswerter Einfluss auf den Potentialverlauf an der Oberfläche 22a der Steuerschicht 22 feststellbar ist. Die nicht oder schlecht leitenden Bahnen 26a, die selbstverständlich auch ganz einfach Unterbrechungen der lichtelektrischen Leiterschicht 26 sein können, verhindern oder erschweren einen Ladungsträgertransport entlang der Streifen A,B des Elektrodenrasters 25, und damit eine dem sog. "Breitlaufen" von Bildzeilen ähnliche unerwünschte Erscheinung.

Die opake Schutzschicht 27 ist nichtleitend oder hat wenigstens eine wesentlich geringere Leitfähigkeit als die lichtelektrische Leiterschicht 26 ohne Lichtbeaufschlagung (Dunkelleitfähigkeit). Ferner soll sie auch keinen lichtelektrischen Effekt aufweisen. Sie kann durch aufgedampfte Pigmente, in Epoxidharz gebundene Pigmente, Cermet oder mit p und n ausgewogen dotiertes amorphes Silizium realisiert sein.

Der Luftspalt zwischen der Steuerschicht 22 und der Schutzschicht 27 ist vorzugsweise mit einem Gas hoher Durchschlagsfestigkeit, z.B. SF$_6$ ausgefüllt.

Die Steuerschicht 26 besteht aus einem Gel und ist vorzugsweise mit Zuschlagsstoffen dotiert, die den Brechungsindex möglichst gross machen, ohne aber die Transparenz herabzusetzen. Ein Beispiel für solche Zuschlagsstoffe sind Phenylsilikonöle.

Weiter ist die Gel-Schicht 22 vorzugsweise mit Zuschlagsstoffen dotiert, die das Gel leitfähig machen, ohne dabei aber die optischen Eigenschaften nennenswert zu beeinträchtigen. Beispiele für solche Zuschlagstoffe sind Polyacetylene.

Die Spannungsquelle 29 liefert mit Vorteil eine Rechteckspannung. Dadurch erfährt die Gelschicht 22 eine gleichmässige Kraft, solange die Leitfähigkeit der lichtelektrischen Leiterschicht 26 gering ist. Dies ist günstig für den Lichtwirkungsgrad des Hellfeldes.

Ferner ist mit Vorteil eine automatische Umschaltvorrichtung 45 vorgesehen, welche die Polarität der Streifen A und B des Elektrodenrasters 25 periodisch (Frequenz 0,1 bis 0,5 Hz) vertauscht. Dadurch wird die Gelschicht 22 nicht immer an derselben Stelle verformt und geht keine plastischen Verformungen ein. Ebenso werden allenfalls noch vorhandene Restraumladungseffekte symmetriert.

Um Unterbrechungen in den Streifen A,B des Elektrodenrasters 25 bzw. deren Auswirkungen zu unterbinden, sind die jeweils gleichpoligen Streifen vorzugsweise an ihren beiden Enden elektrisch miteinander verbunden.

Zwischen der Isolationsschicht 43 und der lichtelektrischen Leiterschicht 26 oder zwischen dieser und der Schutzschicht 27 kann sich ferner eine dünne Passivierungsschicht 46 aus Siliziumdioxid oder Siliziumnitrid befinden (Fig. 5), die störende Oberflächeneffekte an der lichtelektrischen Leiterschicht 26 unterdrückt.

Ein praktisches Ausführungsbeispiel eines erfindungsgemässen Steuerelements SE nach Fig. 3 weist folgende Daten auf:

| Rasterperiode c | 30 $\mu$m |
|---|---|
| Breite der Leiterstreifen d | 6 $\mu$m |
| Dicke der Isolationsschicht 43 | 5 $\mu$m |
| Dicke der lichtelektrischen Leiterschicht 26 | 0,7 $\mu$m |
| Dicke der Schutzschicht 27 | 3 $\mu$m |
| Luftabstand W | 20 $\mu$m |
| Dicke der Gelschicht 22 | 40 $\mu$m |

Die transparenten Elektroden bestehen vorzugsweise aus Indium-Zinn-Oxid. Alle anderen Daten, soweit nicht anders angegeben, gemäss Stand der Technik, beispielsweise EP-B 29 006 (≙US-A-4 519 682).

In Fig. 5 ist eine weitere Variante eines erfindungsgemässen Steuerelements SE dargestellt, welche sich von der Variante nach Fig. 3 im wesentlichen nur dadurch unterscheidet, dass jetzt die mit A, B und C bezeichneten Streifen des Elektrodenrasters 25 zyklisch abwechselnd an je einen Pol von drei verschiedenen Wechselspannungsquellen 29a-c angeschlossen sind, deren anderer Pol an der Gegenelektrode 21 (Masse, Bezugspotential) liegt. Ansonsten entspricht diese Variante in allen Details der Ausführungsform nach Fig. 3. Ferner ist noch eine Phasenschieberstufe 47 vorgesehen.

Die drei Wechselspannungsquellen 29a-c erzeugen drei gleiche, amplitudenmodulierte Wechselspannungen, deren modulierende Funktionen gegeneinander um je $120°$ phasenversetzt sind, gemäss folgenden Formeln:

$$u_a(t) = U_0 \cdot \cos\omega t \cdot [k + \cos(\phi_0)]$$
$$u_b(t) = U_0 \cdot \cos\omega t \cdot [k + \cos(\phi_0 + 120°)]$$
$$u_c(t) = U_0 \cdot \cos\omega t \cdot [k + \cos(\phi_0 - 120°)]$$

Darin sind $u_a(t)$, $u_b(t)$, $u_c(t)$ die momentanen Spannungen, $U_0$ der Scheitelwert der Amplitude, $\omega$ die Frequenz, $\phi_0$ die Phase der Modulation und $k$ ein Parameter zwischen 0 und $\geq 1$, in der Praxis vorzugsweise $k = 1$.

Der Vorteil dieser 3-phasigen Ansteuerung des Elektrodenrasters 25 liegt darin, dass der Ort der grössten Verformung der Steuerschicht 22 nun nicht mehr an das Raster gebunden ist, sondern via die Modulationsphase $\phi_0$ elektrisch eingestellt werden kann. Ist $\phi_0$ beispielsweise 0, dann befindet sich der Ort der grössten Gelschicht-Verformung am Ort der Rasterstreifen A. Bei $\phi_0 = -60°$ liegt er zwischen den Streifen A und B. Je nach $\phi_0$ kann er alle Punkte vom Streifen A zum Streifen C durchlaufen.

Durch geeignete zeitliche Variation der Modulationsphase $\phi_0$ kann die Gelschicht 22 über die Zeit gemittelt an allen Orten gleichmässig beansprucht werden, wodurch bleibende Deformationen vermieden werden. Bei geeigneter Wahl von $k$ (z.B. $k = 1$) kann diese Verschiebung so erfolgen, dass die Gelverformung niemals zu Null wird.

Die zeitliche Variation der Modulationsphase $\phi_0$ erfolgt durch die Phasenschieberstufe 47 in einer Weise, dass $\phi_0$ mit einer Frequenz von z.B. 0,5 bis 50 Hz periodisch alle möglichen Werte von $0°$ bis $360°$ durchläuft. Dadurch können gewissermassen "Wanderwellen" in der Gelschicht 22 erzeugt werden, welche die Auflösung verbessern und Moirée-Effekte zeitlich mitteln und so unterdrücken.

Bei dieser Ausführungsvariante hat sich für das Elektrodenraster 25 eine Rasterperiode c von 20 $\mu$m bei einer Breite d der Rasterstreifen von 5 $\mu$m bewährt. Alle anderen Daten und Konstruktionsmerkmale sind gleich wie beim Ausführungsbeispiel nach Fig. 3 bzw., soweit nicht näher spezifiziert, wie bei den bekannten Vorrichtungen dieser Art.

**Patentansprüche**

1. Vorrichtung zur Verstärkung der Intensität eines optisch erzeugten Bildes, bei welcher Abbildungsmittel (2, 3, 6, 8) mindestens eine von einer Lichtquelle (1) auf einer Referenzfläche beleuchtete streifenförmige Zone (4) auf einen zugeordneten Lichtundurchlässigen Blendenstreifen (7) über eine spiegelnde Fläche (22a) optisch abbilden und die spiegelnde Fläche auf einer durch elektrische Feldkräfte deformierbaren Steuerschicht (22) angeordnet und durch die Steuerschicht deformierbar ist oder durch deren freie Oberfläche gebildet ist, mit einer hinter der Steuerschicht und parallel dazu angeordneten lichtelektrischen Leiterschicht (26), auf welche das zu verstärkende Bild abgebildet wird und die ein auf die Steuerschicht (22) einwirkendes elektrisches Feld beeinflusst, welches zwischen einem der lichtelektrischen Leiterschicht (26) belichtungsseitig vorgelagerten, eine Schar von in regelmässigen Abständen parallel nebeneinander verlaufenden und elektrisch leitenden Streifen (25a) umfassenden Elektrodenraster (25) und einer bezüglich der lichtelektrischen Leiterschicht jenseits der Steuerschicht (22) angeordneten Gegenelektrode (21) herrscht, sowie mit Mitteln (6, 8) zur Abbildung der deformierten spiegelnden Fläche (22a) an den Kanten des Blendenstreifens (7) vorbei auf eine Projektionsfläche (9), dadurch gekennzeichnet, dass der Elektrodenraster (25) gegenüber der lichtelektrischen Leiterschicht (26) elektrisch isoliert angeordnet ist.

2. Vorrichtung nach Anspruch 1, dadurch gekennzeichnet, dass die Gegenelektrode (21) an den einen Pol einer Wechselspannungsquelle (29) und die elektrisch leitenden Streifen (A,B) des Elektrodenrasters (25) abwechselnd an den einen und an den anderen Pol derselben Wechselspannungsquelle angeschlossen sind.

3. Vorrichtung nach Anspruch 1, dadurch gekennzeichnet, dass der Elektrodenraster (25) aus zyklisch abwechselnd aufeinanderfolgenden ersten, zweiten und dritten elektrisch leitenden Streifen (A, B, C) besteht, wobei jeweils alle ersten, zweiten und dritten Streifen an den einen Pol einer ersten bzw. zweiten bzw. dritten Wechselspannungsquelle (29a-c) angeschlossen sind und der andere Pol aller drei Wechselspannungsquellen mit der Gegenelektrode (21) verbunden ist.

4. Vorrichtung nach einem der Ansprüche 1-3, dadurch gekennzeichnet, dass der Elektrodenraster (25) optisch im wesentlichen transparent ist und vorzugsweise aus Indium-Zinn-Oxid besteht.

5. Vorrichtung nach einem der Ansprüche 1-4, dadurch gekennzeichnet, dass auf der der Gegenelektrode (21) abgewandten Seite des Elektrodenrasters (25) eine im Bereich der Streifen (A-C) des Elektrodenrasters weniger und im Bereich zwischen den Streifen stärker lichtdämpfende Ausgleichsschicht (44) angeordnet ist.

6. Vorrichtung nach Anspruch 5, dadurch gekennzeichnet, dass die Ausgleichsschicht (44) eine lokal unterschiedliche Reflektivität aufweist, welche die lokal unterschiedliche Lichtdämpfung bewirkt.

7. Vorrichtung nach einem der Ansprüche 1-6, dadurch gekennzeichnet, dass der Elektrodenraster mittels einer Isolierschicht (43) aus hochreinem, temperaturfestem Kunststoff, beispielsweise Polyimid, oder aus anorganischem Material wie Siliziumdioxid oder Siliziumnitrid elektrisch isoliert ist.

8. Vorrichtung nach einem der Ansprüche 1-7, dadurch gekennzeichnet, dass die lichtelektrische Leiterschicht (26) aus amorphem oder kristallinem Silizium besteht.

9. Vorrichtung nach einem der Ansprüche 1-8, dadurch gekennzeichnet, dass die lichtelektrische Leiterschicht (26) durch eine Vielzahl von relativ schmalen elektrisch schlecht oder nicht leitenden Bahnen (26a) unterbrochen ist, welche sich senkrecht zu den elektrisch leitenden Streifen (A,B) des Elektrodenrasters (25) erstrecken und einen Ladungsträgertransport längs der Streifen (A,B) erschweren oder verhindern.

10. Vorrichtung nach einem der Ansprüche 1-9, dadurch gekennzeichnet, dass der lichtelektrischen Leiterschicht (26) steuerschichtseitig eine im wesentlichen lichtundurchlässige Schwarzschicht (27) vorgelagert ist, deren elektrische Leitfähigkeit wesentlich geringer ist als die Dunkelleitfähigkeit der lichtelektrischen Leiterschicht (26) und welche keinen lichtelektrischen Effekt aufweist.

11. Vorrichtung nach einem der Ansprüche 1-10, dadurch gekennzeichnet, dass zwischen der Steuerschicht (22) und der lichtelektrischen Leiterschicht (26) bzw. der Schwarzschicht (27) ein mit einem Gas hoher Durchschlagfestigkeit ausgefüllter Zwischenraum ist.

12. Vorrichtung nach einem der Ansprüche 1-11, dadurch gekennzeichnet, dass die Steuerschicht (22) aus einem mit Zuschlagstoffen dotierten Gel besteht, welche den Brechungsindex der Steuerschicht möglichst gross machen, ohne aber deren Transparenz zu reduzieren.

13. Vorrichtung nach einem der Ansprüche 1-12, dadurch gekennzeichnet, dass die Steuerschicht (22) aus einem mit Zuschlagstoffen dotiertem Gel besteht, welche das Gel leitfähig machen, ohne seine optischen Eigenschaften wesentlich zu beeinträchtigen.

14. Vorrichtung nach einem der Ansprüche 1-13, dadurch gekennzeichnet, dass die Wechselspannungsquelle (29) eine Rechteckspannung abgibt.

15. Vorrichtung nach einem der Ansprüche 1-14, dadurch gekennzeichnet, dass Mittel (45) vorgesehen sind, um die Streifen (A.B) des Elektrodenrasters (25) periodisch abwechselnd an den einen bzw. den anderen Pol der Wechselspannungsquelle (29) anzuschliessen.

16. Vorrichtung nach einem der Ansprüche 1-15, dadurch gekennzeichnet, dass die jeweils auf gleichem Potential liegenden Streifen (A-C) des Elektrodenrasters (25) jeweils an ihren beiden Enden elektrisch leitend miteinander verbunden sind.

17. Vorrichtung nach einem der Ansprüche 1-16, dadurch gekennzeichnet, dass der lichtelektrischen Leiterschicht (26) eine relativ dünne Passivierungsschicht (46) aus z.B. Siliziumdioxid oder Siliziumnitrid unmittelbar vor- oder nachgeschaltet ist, welche störende Oberflächeneffekte an der lichtelektrischen Leiterschicht (26) unterdrückt.

18. Vorrichtung nach einem der Ansprüche 3-17, dadurch gekennzeichnet, dass die drei Wechselspannungsquellen (29a-c) gleiche, aber gegeneinander vorzugsweise um je 120° phasenversetzt amplitudenmodulierte Wechselspannungen abgeben.

**19.** Vorrichtung nach Anspruch 18, dadurch gekennzeichnet, dass Mittel (47) vorhanden sind, um die Phasen ($\phi_0$) der Amplitudenmodulation der Wechselspannungen zeitlich zu variieren.

**Claims**

**1.** Apparatus for the amplification of the intensity of an optically produced image, in which imaging means (2, 3, 6, 8) optically image at least one strip-form zone (4), illuminated on a reference surface by a source of light (1), onto an associated opaque diaphragm strip (7) by means of a reflecting surface (22a), the reflecting surface being arranged on a control layer (22) deformable by electrical field forces and being deformable by the control layer or being formed by the free surface of the control layer, with a photoelectric conducting layer (26) which is arranged behind the control layer and parallel thereto and onto which the image to be amplified is imaged and which affects an electrical field acting on the control layer (22), the electrical field prevailing between an electrode grid (25) arranged to the illuminated side of the photoelectric conducting layer (26), said electrode grid comprising an array of electrically conducting strips (25a) extending parallel to each other and at uniform distances from each other, and a counter-electrode (21) located beyond the control layer (22) relative to the photoelectric conducting layer, and also with means (6, 8) for imaging the deformed reflecting surface (22a) past the edges of the diaphragm strip (7) onto a projection surface (9), wherein the electrode grid (25) is arranged in an electrically insulated manner with respect to the photoelectric conducting layer (26).

**2.** Apparatus according to claim 1, wherein the counter-electrode (21) is connected to the first pole of an alternating voltage source (29) and the electrically conducting strips (A, B) of the electrode grid (25) are connected alternately to the first and the second pole of the same alternating voltage source.

**3.** Apparatus according to claim 1, wherein the electrode grid (25) comprises cyclically alternating successive first, second and third electrically conducting strips (A, B, C), all first, second and third strips being respectively connected to the first pole of a first or second or third alternating voltage source (29a-c) and the second pole of all three alternating voltage sources being connected to the counter-electrode (21).

**4.** Apparatus according to any one of claims 1 to 3, wherein the electrode grid (25) is optically substantially transparent and is formed preferably of indium-tin oxide.

**5.** Apparatus according to any one of claims 1 to 4, wherein there is arranged on the side of the electrode grid (25) remote from the counter-electrode (21) an equalizing layer (44) providing a lower level of light-reduction in the region of the strips (A-C) of the electrode grid and a greater level of light-reduction in the region between the strips.

**6.** Apparatus according to claim 5, wherein the equalizing layer (44) has a locally differing reflectivity effecting the locally differing light-reduction.

**7.** Apparatus according to any one of claims 1 to 6, wherein the electrode grid is electrically insulated by an insulating layer (43) of high-purity, heat-resistant plastics, for example polyimide, or of inorganic material, such as silicon dioxide or silicon nitride.

**8.** Apparatus according to any one of claims 1 to 7, wherein the photoelectric conducting layer (26) is formed of amorphous or crystalline silicon.

**9.** Apparatus according to any one of claims 1 to 8, wherein the photoelectric conducting layer (26) is interrupted by a plurality of relatively narrow poorly electrically conducting or nonconducting paths (26a) that extend perpendicularly to the electrically conducting strips (A, B) of the electrode grid (25) and impede or prevent movement of charge carriers along the strips (A, B).

**10.** Apparatus according to any one of claims 1 to 9, wherein a substantially opaque black layer (27) is arranged to the control layer side of the photoelectric conducting layer (26), the electrical conductivity of which opaque black layer is substantially lower than the dark conductivity of the photoelectric conducting layer (26) and which has no photoelectric effect.

11. Apparatus according to any one of claims 1 to 10, wherein there is located between the control layer (22) and the photoelectric conducting layer (26) or the black layer (27) a gap filled with a gas having a high breakdown resistance.

12. Apparatus according to any one of claims 1 to 11, wherein the control layer (22) comprises a gel doped with additives maximizing the refractive index of the control layer without reducing the transparency thereof.

13. Apparatus according to any one of claims 1 to 12, wherein the control layer (22) comprises a gel doped with additives rendering the gel conductive without substantially impairing its optical properties.

14. Apparatus according to any one of claims 1 to 13, wherein the alternating voltage source (29) yields a square wave voltage.

15. Apparatus according to any one of claims 1 to 14, wherein means (45) are provided for connecting the strips (A, B) of the electrode grid (25) in periodically alternating manner to the first and the second pole of the alternating voltage source (29).

16. Apparatus according to any one of claims 1 to 15, wherein the strips (A-C) of the electrode grid (25) which are all at the same potential are connected to one another in electrically conducting manner at both of their respective ends.

17. Apparatus according to any one of claims 1 to 16, wherein a relatively thin passivating layer (46), for example of silicon dioxide or silicon nitride, is arranged immediately in front of or behind the photoelectric conducting layer (26), which passivating layer suppresses interfering surface effects on the photoelectric conducting layer (26).

18. Apparatus according to any one of claims 3 to 17, wherein the three alternating voltage sources (29a-c) yield amplitude-modulated alternating voltages that are identical but are offset in phase relative to each other preferably by $120\degree$.

19. Apparatus according to claim 18, wherein means (47) are provided for varying over time the phases ($\phi_0$) of the amplitude modulation of the alternating voltages.

**Revendications**

1. Dispositif d'amplification de l'intensité d'une image produite optiquement, dans lequel des moyens (2, 3, 6, 8) de projection projettent optiquement, par l'intermédiaire d'une surface réfléchissante (22a), au moins une zone (4) en forme de raies ou de barres, éclairée sur une surface de référence par une source lumineuse (1), sur une raie (7), formant un diaphragme non transparent à la lumière, qui lui est associée, et dans lequel la surface réfléchissante est disposée sur une couche de commande (22) susceptible d'être déformée par des forces de champ électriques et qui peut être déformée par la couche de commande ou bien est formée par la surface libre de celle-ci, comportant une couche conductrice photoélectrique (26) disposée derrière la couche de commande et parallèlement à celle-ci, sur laquelle l'image qu'il s'agit d'amplifier est projetée et qui a une influence sur le champ électrique qui agit sur la couche de commande (22), et qui règne entre un réseau (25) d'électrodes qui est placé en amont du côté éclairé de la couche conductrice photoélectrique (26) et qui comprend un très grand nombre de raies (25a) électriquement conductrices qui s'étendent les unes à côté des autres, parallèlement entre elles avec des écarts réguliers, et une contre-électrode (21) disposée en-deçà de la couche de commande (22) par rapport à la couche conductrice photoélectrique, le dispositif comportant également des moyens (6, 8) destinés à la projection de la surface réfléchissante déformée (22a), en passant devant les bords des raies, bandes ou barres formant un diaphragme (7) sur une surface de projection (9), dispositif caractérisé en ce que le réseau (25) d'électrodes est disposé de façon électriquement isolée par rapport à la couche conductrice photoélectrique (26).

**2.** Dispositif selon la revendication 1, caractérisé en ce que la contre-électrode (21) est branchée sur l'un des pôles d'une source de tension alternative (29) et en ce que les raies électriquement conductrices (A, B) du réseau (25) d'électrodes sont alternativement raccordées à l'un et à l'autre pôle de la même source de tension alternative.

**3.** Dispositif selon la revendication 1, caractérisé en ce que le réseau (25) d'électrodes est constitué par des premières, deuxièmes et troisièmes raies (A, B, C) qui se suivent en alternance cyclique,- (appartenant au réseau (25) d'électrodes),toutes les premières, deuxièmes et troisièmes raies étant raccordées à l'un des pôles d'une première, ou d'une deuxième ou d'une troisième source (29a à 29c) de tension alternative, et en ce que l'autre pôle des trois sources de tension alternative,est raccordé à la contreélectrode (21).

**4.** Dispositif selon une des revendications 1 à 3, caractérisé en ce que le réseau (25) d'électrodes est, optiquement, sensiblement transparent et est, de préférence, constitué par de l'oxyde d'indium-étain.

**5.** Dispositif selon une des revendications 1 à 4, caractérisé en ce que, sur le côté du réseau (25) d'électrodes opposé à la contre-électrode (21), est disposée une couche (44) de compensation qui atténue moins la lumière dans la zone des raies (A à C) du réseau d'électrodes et qui l'atténue davantage entre les raies.

**6.** Dispositif selon la revendication 5, caractérisé en ce que la couche (44) de compensation présente une capacité de réflexion localement différente, qui provoque une atténuation localement différente de lumière.

**7.** Dispositif selon une des revendications 1 à 6, caractérisé en ce que le réseau d'électrodes est isolé électriquement au moyen d'une couche (43) d'isolation, réalisée en une matière plastique très pure et résistante à la chaleur, par exemple en polyimide, ou en un matériau minéral tel que le dioxyde de silicium ou le nitrure de silicium.

**8.** Dispositif selon une des revendications 1 à 7, caractérisé en ce que la couche conductrice photoélectrique (26) est constituée par du silicium amorphe ou cristallin.

**9.** Dispositif selon une des revendications 1 à 8, caractérisé en ce que la couche conductrice photoélectrique (26) est interrompue par un grand nombre de pistes (26a) relativement étroites non conductrices ou mauvaises conductrices de l'électricité, qui s'étendent perpendiculairement aux raies électriquement conductrices (A, B) du réseau (25) d'électrodes et qui rendent difficile ou empêchent le transport de supports de charge le long des raies (A, B).

**10.** Dispositif selon des revendications 1 à 9, caractérisé en ce qu'en amont de la couche conductrice photoélectrique (26) est disposée, du côté de la couche de commande, une couche noire (27) sensiblement non transparente, dont la conductibilité électrique est sensiblement plus faible que la conductibilité,dans l'obscurité,de la couche conductrice photoélectrique (26) et qui ne présente aucun effet de photoélectricité.

**11.** Dispositif selon une des revendications 1 à 10, caractérisé en ce qu'entre la couche de commande (22) et la couche conductrice photoélectrique (26), ou la couche noire (27), il y a un espace intermédiaire rempli d'un gaz doté d'une grande résistance au claquage.

**12.** Dispositif selon une des revendications 1 à 11, caractérisé en ce que la couche de commande (22) est constituée par un gel dopé au moyen d'additifs qui donnent à l'indice de réfraction de la couche de commande une valeur aussi grande que possible, sans toutefois réduire sa transparence.

**13.** Dispositif selon une des revendications 1 à 12, caractérisé en ce que la couche de commande (22) est constituée par un gel dopé au moyen d'additifs qui rendent le gel conducteur, sans sensiblement exercer d'influence négative sur ses propriétés optiques.

**14.** Dispositif selon une des revendications 1 à 13, caractérisé en ce que la source de tension alternative (29) délivre une tension rectangulaire ou crénelée.

**15.** Dispositif selon une des revendications 1 à 14, caractérisé en ce que des moyens (45) sont prévus pour raccorder, en alternance périodique, les raies (A, B) du réseau (25) d'électrodes à l'un ou à l'autre des pôles de la source de tension alternative (29).

**16.** Dispositif selon une des revendications 1 à 15, caractérisé en ce que les raies (A à c) du réseau (25) d'électrodes, qui sont dans chaque cas au même potentiel, sont chacune raccordées ensemble de façon électriquement conductrice à leurs deux extrémités.

**17.** Dispositif selon une des revendications 1 à 16,, caractérisé en ce que la couche conductrice photoélectrique (26) reçoit,immédiatement en amont ou en aval, une couche (46) relativement mince de passivation qui est par exemple en dioxyde de silicium ou en nitrure de silicium, et qui réduit fortement les effets de surface perturbateurs pouvant s'exercer sur la couche conductrice photoélectrique (26).

**18.** Dispositif selon une des revendications 3 à 17, caractérisé en ce que les trois sources de tension alternatives (29 à 29c) délivrent des tensions alternatives égales modulées en amplitude, mais présentant un décalage de phase, de préférence de 120˚, de chacune d'elles par rapport aux autres.

**19.** Dispositif selon la revendication 18, caractérisé en ce qu'il comporte la présence de moyens (47) pour faire varier dans le temps les phases($\phi_0$)de la modulation d'amplitude des tensions alternatives.

**Fig. 1**

# Fig. 2

**Fig. 3** (5)

SE

23

44

25

43

26

27

22a

22

21

45

A    B

29

**Fig. 4** (6)

δ

A

B

A

25

## Fig. 5 (7)

SE

23

44
43
25
26
46
27

| A | B | C | A | B | C | A |

22a
22
21

A     B     C
29a   29b   29c

47    $\Phi_o = \Phi_o(t)$

## Fig. 6 (8)

25

d

c

| A | B | A |

43
26a
26